# EUROPÄISCHE PATENTSCHRIFT

(11) **EP 2 614 272 B1**
(45) Veröffentlichungstag und Bekanntmachung des Hinweises auf die Patenterteilung: **04.03.2015**
(21) Anmeldenummer: 11801558.5
(22) Anmeldetag: 18.08.2011
(51) Int. Cl.: F16D 1/10, F16F 15/12, F16F 15/123

(54) **DREHMOMENTÜBERTRAGUNGSVORRICHTUNG**
TORQUE-TRANSMISSION DEVICE
DISPOSITIF DE TRANSMISSION DE COUPLE

(30) Priorität: 09.09.2010 DE 102010044883
(43) Veröffentlichungstag der Anmeldung: 17.07.2013
(73) Patentinhaber: Schaeffler Technologies AG & Co. KG, 91074 Herzogenaurach (DE)
(72) Erfinder: JUNKER, Uli, 77652 Offenburg (DE)
(86) Internationale Anmeldenummer: PCT/DE2011/001627
(87) Internationale Veröffentlichungsnummer: WO 2012/037918

(56) Entgegenhaltungen:
- EP-A2- 0 320 955
- WO-A2-2007/000151
- DE-A1- 3 616 301
- DE-A1- 19 913 649
- GB-A- 2 151 749
- US-A- 4 941 860

## Beschreibung

Die vorliegende Erfindung betrifft eine Drehmomentübertragungsvorrichtung gemäß dem Oberbegriff des Patentanspruchs 1.

Eine solche Drehmomentübertragungsvorrichtung ist beispielsweise in der WO 2007/000151 A2 beschrieben. Die Drehmomentübertragungsvorrichtung weist eine erste Baugruppe auf, die mit einer Abtriebswelle eines Motors verbindbar ist und einen Ausgangsflansch aufweist. Darüber hinaus weist die Drehmomentübertragungsvorrichtung eine zweite Baugruppe auf, die getriebeseitig vormontierbar ist und einen Mitnehmerring aufweist. In axialer Richtung der Drehmomentübertragungsvorrichtung sind beide Baugruppen durch eine Steckverbindung mit ineinandergreifenden Profilierungen und Gegenprofilierungen miteinander koppelbar. Um eine einfache Montage und Demontage der Drehmomentübertragungsvorrichtung zu ermöglichen, ist die Verbindung begrenzt axial verlagerbar.

Die axiale Steckverbindung weist ein Umfangsspiel auf, da Profilierungen und Gegenprofilierungen nicht beliebig genau zu vertretbaren Kosten hergestellt werden können. Daher kann es im Betrieb der Drehmomentübertragungsvorrichtung, das heißt unter Motorlast, zwischen den ineinandergreifenden Profilierungen und Gegenprofilierungen zu Anschlags- bzw. Klappergeräuschen kommen. Diese Geräusche entstehen durch Torsionsschwingungen, Taumelschwingungen und Axialschwingungen in der Drehmomentübertragungsvorrichtung bzw. in den eingangs- und ausgangsseitig mit der Drehmomentübertragungsvorrichtung verbundenen Baugruppen.

Zur Vermeidung der Anschlags- bzw. Klappergeräusche sind die beiden Baugruppen, die durch die Steckverbindung miteinander koppelbar sind, in der WO 2007/000151 A2 über eine Verspannungseinrichtung miteinander verspannbar. Wenn der mit der Eingangsseite der Drehmomentübertragungsvorrichtung verbundene Motor in seiner Hauptbetriebsrichtung, beispielsweise im Zugbetrieb arbeitet, verhindert die entgegengerichtete Verspannung durch die Verspannungseinrichtung ein Anschlagen bzw. Klappern der ineinandergreifenden Profilierungen und Gegenprofilierungen der axialen Steckverbindung.

In der WO 2007/000151 A2 ist die Verspannungseinrichtung in radialer Richtung der Drehmomentübertragungsvorrichtung außerhalb der ineinandergreifenden Profilierungen und Gegenprofilierungen angeordnet. Somit ist die Verspannungseinrichtung im Wirkpfad zwischen dem Ausgangsflansch der ersten Baugruppe einerseits und den ineinandergreifenden Profilierungen und Gegenprofilierungen andererseits angeordnet.

Nachteilig bei diesem Aufbau ist, dass radialer Bauraum in der Drehmomentübertragungsvorrichtung verschenkt wird. Die innerhalb der Verspannungseinrichtung angeordnete axiale Steckverbindung sollte einen bestimmten Durchmesser nicht unterschreiten, da anderenfalls die Anzahl der ineinandergreifenden Profilierungen und Gegenprofilierungen verringert werden müsste, was zu einem Anstieg der Flächenpressung und des Verschleißes in der axialen Steckverbindung führen würde.

Es ist daher Aufgabe der vorliegenden Erfindung, eine Drehmomentübertragungsvorrichtung anzugeben, durch die der Bauraum besser genutzt werden kann.

Erfindungsgemäß gelöst wird diese Aufgabe durch eine Drehmomentübertragungsvorrichtung gemäß Patentanspruch 1 mit zumindest einer ersten Baugruppe, die mit einer Abtriebswelle eines Motors verbindbar ist und einen Ausgangsflansch aufweist, und zumindest einer zweiten Baugruppe, die getriebeseitig vormontierbar ist und einen Mitnehmerring aufweist, wobei beide Baugruppen in axialer Richtung durch zumindest eine Steckverbindung mit ineinandergreifenden Profilierungen und Gegenprofilierungen miteinander koppelbar sind und über zumindest eine Verspannungseinrichtung verspannbar sind. Die Verspannungseinrichtung ist zumindest teilweise im Wirkpfad zwischen den ineinandergreifenden Profilierungen und Gegenprofilierungen einerseits und dem Mitnehmerring der zweiten Baugruppe andererseits angeordnet, wodurch der Bauraum innerhalb der Drehmomentübertragungsvorrichtung besser genutzt werden kann.

Weiterhin weisst die Verspannungseinrichtung zumindest einen Verspannring und zumindest einen Energiespeicher auf, wobei der Verspannring zumindest einzelne Vorsprünge in seinem Aussenumfang aufweist, die ausgebildet sind, mit den entsprechenden Profilierungen oder Gegenprofilierungen zusammenzuwirken, so dass durch den mittels des zumindest einen Energiespeichers vorgespannten Vorspannrings eine Verspannung der axialen Steckverbindung in Umfangsrichtung erfolgt.

Durch den gewonnenen Bauraum ist es beispielsweise möglich, die Anzahl der Profilierungen und Gegenprofilierungen zu erhöhen, wodurch die Flächenpressung und der Verschleiß innerhalb der axialen Steckverbindung verringert werden kann. Gleichzeitig verringert bzw. unterdrückt die Verspannungseinrichtung das Auftreten von Anschlags- bzw. Klappergeräuschen, insbesondere aufgrund von Torsionsschwingungen, Taumelschwingungen und Axialschwingungen innerhalb der Drehmomentübertragungsvorrichtung.

Bevorzugte Ausführungsbeispiele der Erfindung sind in den abhängigen Patentansprüchen dargelegt.

Insbesondere erfolgt durch die Verspannungseinrichtung eine Verspannung der axialen Steckverbindung in Umfangsrichtung, indem die Verspannungseinrichtung mit den Profilierungen und/oder Gegenprofilierungen der Steckverbindung zusammenwirkt. Bei den Profilierungen kann es sich beispielsweise um eine Außenverzahnung handeln, während die Gegenprofilierungen als Innenverzahnung ausgebildet sind. Die Außenverzahnung greift im Wesentlichen formschlüssig in die Innenverzahnung, wobei die bereits zuvor erwähnten Fertigungstoleranzen unter Maßgabe einer wirtschaftlichen Herstellung der Drehmomentübertragungsvorrichtung keinen absoluten Formschluss in Umfangsrichtung und radialer Richtung zulassen. Ferner muss auch die axiale Verschiebbarkeit zwischen Innenverzahnung und Außenverzahnung gewahrt bleiben, um eine einfache Montage und Demontage der ersten und zweiten Baugruppe zu ermöglichen.

Vorzugsweise ist die Verspannungseinrichtung zumindest teilweise in radialer Richtung innerhalb der ineinandergreifenden Profilierungen und/oder Gegenprofilierungen angeordnet. "In radialer Richtung innerhalb" bedeutet in diesem Zusammenhang "zwischen Profilierungen und Rotationsachse der Drehmomentübertragungseinrichtung" bzw. "zwischen Gegenprofilierungen und Rotationsachse der Drehmomentübertragungseinrichtung". Durch diese Anordnung wird der radiale Bauraum innerhalb der Drehmomentübertragungsvorrichtung besser nutzbar gemacht. Daher ist es insbesondere von Vorteil, wenn die komplette Verspannungseinrichtung in radialer Richtung innerhalb der ineinandergreifenden Profilierungen und/oder Gegenproflierungen angeordnet ist.

Weiterhin vorzugsweise weist die Verspannungseinrichtung zumindest einen Energiespeicher auf. Beispielsweise sind zwei, vier, sechs oder acht Energiespeicher in Umfangsrichtung vorzugsweise gleichmäßig voneinander beabstandet in der Verspannungseinrichtung angeordnet. Jedoch auch ungerade Anzahlen von Energiespeichern können in Umfangsrichtung vorzugsweise gleichmäßig voneinander beabstandet innerhalb der Verspannungseinrichtung angeordnet sein.

Gemäß einem besonders bevorzugten Ausführungsbeispiel ist der Energiespeicher bzw. sind die Energiespeicher in radialer Richtung innerhalb der ineinandergreifenden Profilierungen und/oder Gegenprofilierungen angeordnet, wodurch sich die Nutzbarkeit des radialen Bauraums innerhalb der Drehmomentübertragungsvorrichtung weiter verbessert.

Gemäß einem weiteren bevorzugten Ausführungsbeispiel stützt sich ein Ende des Energiespeichers an einem Verspannring der Verspannungseinrichtung ab. Ein zweites Ende des Energiespeichers stützt sich an zumindest einem Seitenblech ab, das vorzugsweise drehfest mit dem Mitnehmerring verbunden oder einteilig mit dem Mitnehmerring ausgebildet ist. Um einen kompakten Aufbau zu erreichen, ist das Seitenblech vorzugsweise als Bauteil der Steckverbindung ausgebildet. Insbesondere ist es von Vorteil, wenn das Seitenblech daher die Profilierungen oder Gegenprofilierungen aufweist.

Um den Verspannring zuverlässig in axialer Richtung der Drehmomentübertragungsvorrichtung zu lagern, ist dieser vorzugsweise in axialer Richtung zwischen zwei Seitenblechen der Steckverbindung und/oder der Verspannungseinrichtung angeordnet. Hierzu weist der Verspannring vorzugsweise ein oder mehrere Langlöcher in Umfangsrichtung auf. Vorzugsweise erstrecken sich durch die Langlöcher Stufenbolzen, die in axialer Richtung durch entsprechende Löcher des oder der Seitenbleche hindurchtreten und mit dem oder den Seitenblechen verbunden sind. Jedoch auch andere Arten der Verbindung sind möglich.

Von Vorteil ist es, wenn der Energiespeicher in Umfangsrichtung in Fenstern des Verspannrings und des Seitenblechs oder der Seitenbleche angeordnet ist. Diese Anordnung ermöglicht einen besonders kompakten Aufbau der Verspannungseinrichtung in axialer Richtung der Drehmomentübertragungsvorrichtung.

Vorzugsweise ist der Energiespeicher als Druckfeder, insbesondere als gerade Druckfeder, ausgebildet. Aber auch andere Energiespeicher, beispielsweise zugbelastete Energiespeicher, oder andere Federtypen sind möglich.

Vorzugsweise sind die Profilierungen oder Gegenprofilierungen mittelbar oder unmittelbar mit dem Ausgangsflansch der ersten Baugruppe, insbesondere drehfest, verbunden. Eine mittelbare Verbindung der Profilierungen oder Gegenprofilierungen mit dem Ausgangsflansch der ersten Baugruppe kann beispielsweise durch Stufenbolzen, insbesondere Niete, oder durch Schrauben erfolgen. Eine unmittelbare Verbindung kann beispielsweise durch im Wesentlichen stoffschlüssige Verbindungsverfahren, beispielsweise Schweißen, erfolgen. Aber auch andere Formen der unmittelbaren Verbindung, beispielsweise durch Verpressen, sind möglich.

Alternativ ist es von Vorteil, wenn die Profilierungen oder Gegenprofilierungen einteilig mit dem Ausgangsflansch der ersten Baugruppe ausgebildet ist. Hierdurch ist es möglich, die Anzahl der Bauteile der Drehmomentübertragungsvorrichtung zu verringern, und somit die Montage derselben zu vereinfachen.

Vorzugsweise ist die erste Baugruppe als Torsionsdämpfer, insbesondere vorzugsweise als Zweimassenschwungrad, ausgebildet. Die zweite Baugruppe ist vorzugsweise als Kupplung, insbesondere vorzugsweise als Doppelkupplung, ausgebildet. Der in radialer und axialer Richtung gewonnene Bauraum kann beispielsweise dazu genutzt werden, im Torsionsdämpfer größere Bogenfedem im Hinblick auf steigende Motormomente zu verwenden. Innerhalb der Kupplung bzw. innerhalb der Doppelkupplung ist es möglich, die Dicke der Anpressplatte bzw. die Dicke der Anpressplatten zu erhöhen. Auch innerhalb der Drehmomentübertragungsvorrichtung selbst können Bauteile wie die Druckfedern oder die Stufenbolzen größer ausgebildet oder in höherer Anzahl angeordnet werden, um steigende Motormomente durch die Drehmomentübertragungsvorrichtung übertragen zu können.

Die vorliegende Erfindung wird nachfolgend anhand von bevorzugten Ausführungsbeispielen in Verbindung mit den zugehörigen Figuren näher erläutert. In diesen zeigen:
- Figur 1: einen Halbschnitt durch ein erstes Ausführungsbeispiel einer Drehmomentübertragungsvorrichtu ng,
- Figur 2: einen Halbschnitt durch ein zweites Ausführungsbeispiel einer Drehmomentübertragungsvorrichtung und
- Figur 3: einen Ausschnitt einer axialen Steckverbindung mit Verspannungseinrichtung für eine Drehmomentübertragungsvorrichtung gemäß Figur 1 oder 2.

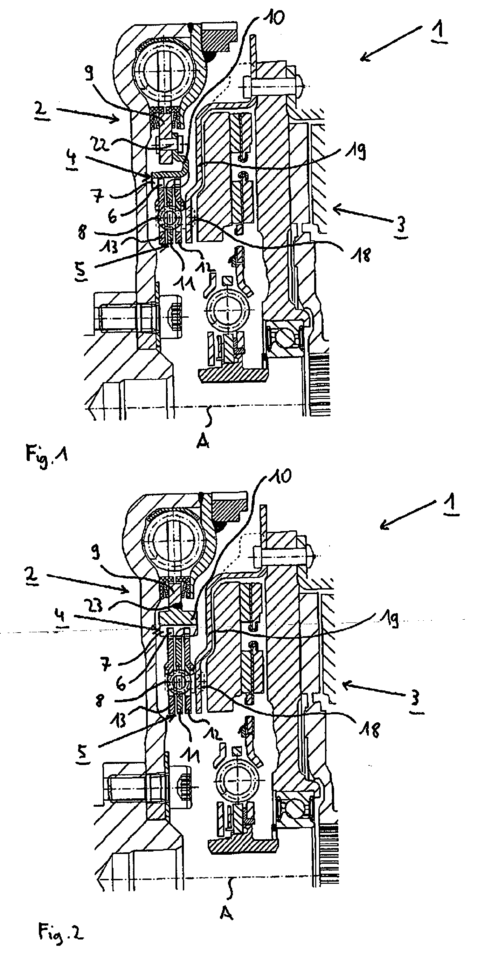

In Figur 1 ist ein erstes Ausführungsbeispiel einer Drehmomentübertragungsvorrichtung 1 in einem Halbschnitt dargestellt. Die Drehmomentübertragungsvorrichtung 1 weist eine Rotationsachse A auf, die mit Bezug auf Figur 1 in einer Links-Rechts-Richtung verläuft. Um die Rotationsachse A ist die Drehmomentübertragungsvorrichtung 1 drehbar gelagert.

Die Drehmomentübertragungsvorrichtung 1 weist zumindest eine erste Baugruppe 2 und eine zweite Baugruppe 3 auf. Die erste Baugruppe 2 ist mit einer Abtriebswelle eines Motors, beispielsweise einer Kurbelwelle eines Verbrennungsmotors, verbindbar. Vorzugsweise ist die erste Baugruppe 2 als Torsionsdämpfer ausgebildet, und insbesondere vorzugsweise - wie in Figur 1 dargestellt - als Zweimassenschwungrad ausgebildet. Die zweite Baugruppe 3 ist getriebeseitig vormontierbar und vorzugsweise als Kupplung, insbesondere vorzugsweise als Doppelkupplung, ausgebildet.

Auf ihrer Ausgangsseite weist die erste Baugruppe 2 einen Ausgangsflansch 9 auf. Auf ihrer Eingangsseite weist die zweite Baugruppe 3 einen Mitnehmerring 19 auf. Zur Übertragung von Drehmomenten sind die Ausgangsseite der ersten Baugruppe 2 und die Eingangsseite der zweiten Baugruppe 3 durch zumindest eine in axialer Richtung begrenzt verlagerbare Steckverbindung 4 koppelbar bzw. gekoppelt und über zumindest eine Verspannungseinrichtung 5 verspannbar bzw. verspannt.

Zur Kopplung weist die Steckverbindung 4 ineinandergreifende Profilierungen 6 und Gegenprofilierungen 7 auf. Beispielsweise sind die Profilierungen 6 als Außenverzahnung, vorzugsweise an einem ersten Seitenblech 12 und/oder an einem zweiten Seitenblech 13, ausgebildet, während die Gegenprofilierungen 7 beispielsweise als Innenverzahnung, vorzugsweise an einem Eingangsring 10 ausgebildet sind. Wenn die Profilierungen 6 - wie dargestellt - einteilig mit den Seitenblechen 12, 13 ausgebildet sind, sind die Seitenbleche 12, 13 sowohl der axialen Steckverbindung 4 als auch der Verspannungseinrichtung 5 zuzuordnen.

Wie in Figur 1 dargestellt, ist der Verspannring 11 vorzugsweise in axialer Richtung zwischen zwei Seitenblechen 12, 13 angeordnet. Jedoch sind auch andere Aufbauten der Verspannungseinrichtung 5 bzw. der Steckverbindung 4 möglich, beispielsweise mit nur einem einseitig angeordneten Seitenblech, das dann beispielsweise als Trägerscheibe ausgebildet ist, wie dies aus der WO 2007/000151 A2 bekannt ist.

Die Verspannungseinrichtung 5 ist zumindest teilweise im Wirkpfad zwischen den ineinandergreifenden Profilierungen 6 und Gegenprofilierungen 7 auf der einen Seite und dem Mitnehmerring 19 der zweiten Baugruppe 3 auf der anderen Seite angeordnet. Wie in Figur 1 dargestellt, ist die Verspannungseinrichtung 5 vorzugsweise zumindest teilweise in radialer Richtung innerhalb der ineinandergreifenden Profilierungen 6 und Gegenprofilierungen 7 angeordnet.

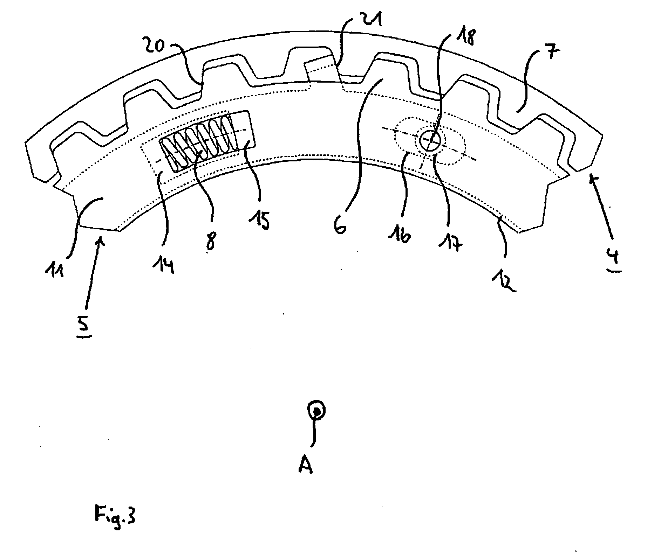

Die axiale Steckverbindung 4 und die Verspannungseinrichtung 5 sind ausschnittsweise in Figur 3 in einer Draufsicht genauer dargestellt. Um ein Umfangsspiel der Steckverbindung 4 auszugleichen, weist die Verspannungseinrichtung 5 neben zumindest einem Verspannring 11 zumindest einen, vorzugsweise mehrere, Energiespeicher 8 auf. Die Energiespeicher 8 sind in radialer Richtung innerhalb der ineinandergreifenden Profilierungen 6 und Gegenprofilierungen 7 angeordnet, wie dies in Figur 3 für einen einzelnen Energiespeicher 8 dargestellt ist.

Durch den mittels der Energiespeicher 8 vorgespannten Verspannring 11 erfolgt eine Verspannung der axialen Steckverbindung 4 in Umfangsrichtung. Hierzu weist der Verspannring 11 zumindest einzelne Vorsprünge in seinem Außenumfang auf, die ausgebildet sind, mit den entsprechenden Profilierungen 6 oder Gegenprofilierungen 7 zusammenzuwirken, indem sie unter Vorspannung des Energiespeichers 8 an Flanken der Profilierungen 6 oder Gegenprofilierungen 7 zur Anlage kommen.

Im vorliegenden Ausführungsbeispiel werden die Vorsprünge unter Vorspannung gegen schubseitige Flanken 21 der Gegenprofilierungen 7 gepresst, während die vorzugsweise am Außenumfang des ersten und/oder zweiten Seitenblechs 12, 13 vorgesehene Profilierungen 6 gegen zugseitige Flanken 20 der Gegenprofilierungen 7 gepresst werden, wie dies in Figur 3 dargestellt ist. Durch die Verspannung gegen zugseitige Flanken 20 und schubseitige Flanken 21 der Gegenprofilierungen 7 werden Anschlags- bzw. Klappergeräusche im Betrieb der Drehmomentübertragungsvorrichtung 1, das heißt unter Motorlast, verringert bzw, unterdrückt.

Um die Auflagefläche der verspannringseitigen Vorsprünge an den schubseitigen Flanken 21 der Gegenprofilierungen 7 zu erhöhen, können die Vorsprünge sich in axialer Richtung der Drehmomentübertragungsvorrichtung 1 erstreckende Abschnitte aufweisen. Im Gegenzug sind dann die auf dem oder den Seitenblechen 12, 13 im Umfang angeordneten Profilierungen 6 in diesen Bereichen der verspannringseitigen Vorsprünge auszulassen.

In einem begrenzten Bereich ist der Verspannring 11 zur Montage und Demontage der Drehmomentübertragungseinrichtung 1 zu den Seitenblechen 12, 13 verdrehbar. Hierzu ist der Spannring 11 mit Langlöchern 16 versehen, die sich in Umfangsrichtung des Spannrings 11 erstrecken. Durch das jeweilige Langloch 16 erstreckt sich ein Stufenbolzen 18 in axialer Richtung der Drehmomentübertragungsvorrichtung 1, wobei der Stufenbolzen 18 an zumindest einem seiner axialen Enden in einem Loch 17 des Seitenblechs 12, 13 gehalten ist.

Im dargestellten Ausführungsbeispiel erstrecken sich die Stufenbolzen 18 in axialer Richtung nicht nur durch die Löcher 17 der Seitenbleche 12, 13 und das Langloch 16 des Verspannrings 11, sondern auch durch entsprechend vorgesehene Löcher im abtriebseitigen Mitnehmerring 19. Somit sind die Seitenbleche 12, 13 drehfest mit dem Mitnehmerring 19 verbunden. Allerdings ist es auch möglich, das Seitenblech bzw. die Seitenbleche einteilig mit dem Mitnehmerring auszubilden.

Auch sind im dargestellten Ausführungsbeispiel die Profilierungen 6 im Außenumfang der Seitenbleche 12, 13 vorgesehen, während die Gegenprofilierungen 7 im Innenumfang des Eingangsring 10 vorgesehen sind. Hierbei ist es gleichermaßen möglich, Profilierungen auf einem von den Seitenblechen verschiedenen Bauteil vorzusehen und/oder Gegenprofilierungen auf einem von dem Eingangsring verschiedenen Bauteil vorzusehen.

Um eine Verspannung des Verspannrings 11 zu Profilierungen 6 bzw. zur Gegenprofilierungen 7 zu erzielen, weisen sowohl der Verspannring 11 als auch das bzw. die Seitenbleche 12, 13 Fenster 14, 15, in denen der jeweilige Energiespeicher 8 vorgesehen ist. Ein Ende des Energiespeichers 8 stützt sich dabei an einer Kante eines Fensters 14 des Verspannrings 11 ab, während das zweite Ende des Energiespeichers 8 sich an einer in Umfangsrichtung gegenüber liegenden Kante eines oder mehrerer Fenster 15 des oder der Seitenbleche 12, 13 abstützt. Zur Abstützung und Führung des Energiespeichers 8 können die Fenster 14, 15 auch spezielle Führungseinrichtungen an ihren Seiten aufweisen.

Vorzugsweise ist der Energiespeicher 8 als Druckfeder, insbesondere vorzugsweise als gerade Druckfeder, ausgebildet. Jedoch auch zugbasierte Energiespeicher oder andere Federtypen sind möglich.

Im ersten Ausführungsbeispiel ist der Eingangsring 10, der an seinem Innenumfang die Gegenprofilierungen 7 aufweist, durch mehrere weitere Stufenbolzen 22 mittelbar mit dem Ausgangsflansch 9 der ersten Baugruppe 2 drehfest verbunden. Jedoch sind auch andere Verbindungsmittel, beispielsweise Schrauben, zur drehfesten Verbindung möglich.

Im Unterschied zum ersten Ausführungsbeispiel ist im zweiten Ausführungsbeispiel, das in Figur 2 dargestellt ist, der Eingangsring 10, der in seinem Innenumfang die Gegenprofilierungen 7 aufweist, durch eine Schweißverbindung 23 mit dem Ausgangsflansch 9 der ersten Baugruppe 2 verbunden. Auch andere Formen der stoffschlüssigen Verbindung sind möglich. Ebenso sind weitere, unmittelbare Verbindungen, beispielsweise durch Verpressen, möglich.

Um Wiederholungen zu vermeiden, wird hinsichtlich der weiteren Merkmale des zweiten Ausführungsbeispiels auf die Erläuterungen zum ersten Ausführungsbeispiel verwiesen. Gleiche Bezugszeichen in den Figuren 1 und 2 bezeichnen in beiden Ausführungsbeispielen die gleichen Merkmale.

Gemäß einem nicht dargestellten Ausführungsbeispiel ist es auch möglich, dass die Profilierungen oder Gegenprofilierungen einteilig mit dem Ausgangsflansch der ersten Baugruppe ausgebildet sind.

Die vorangegangenen Ausführungsbeispiele betreffen eine Drehmomentübertragungsvorrichtung 1 mit zumindest einer ersten Baugruppe 2, die mit einer Abtriebswelle eines Motors verbindbar ist und einen Ausgangsflansch 9 aufweist, und zumindest einer zweiten Baugruppe 3, die getriebeseitig vormontierbar ist und einen Mitnehmerring 19 aufweist. Beide Baugruppen 2, 3 sind in axialer Richtung durch zumindest eine Steckverbindung 4 mit ineinandergreifenden Profilierungen 6 und Gegenprofilierungen 7 miteinander koppelbar und über zumindest eine Verspannungseinrichtung 5 verspannbar. Die Verspannungseinrichtung 5 ist zumindest teilweise im Wirkpfad zwischen den ineinandergreifenden Profilierungen 6 und Gegenprofilierungen einerseits und dem Mitnehmerring 19 der zweiten Baugruppe 3 andererseits angeordnet. Die Verspannungseinrichtung 5 wirkt auf die axiale Steckverbindung 4, um im Betrieb der Drehmomentübertragungseinrichtung 1, das heißt unter Motorlast in einer Hauptbetriebsrichtung, Anschlags- bzw. Klappergeräuschen zur verringern bzw. zu unterdrücken.

### Bezugszeichenliste

- 1.: Drehmomentübertragungseinrichtung
- 2.: erste Baugruppe
- 3.: zweite Baugruppe
- 4.: Steckverbindung
- 5.: Verspannungseinrichtung
- 6.: Profilierungen
- 7.: Gegenprofilierungen
- 8.: Energiespeicher
- 9.: Ausgangsflansch der ersten Baugruppe
- 10.: Eingangsring der Steckverbindung
- 11.: Verspannring
- 12.: erstes Seitenblech
- 13.: zweites Seitenblech
- 14.: Fenster im Verspannring
- 15.: Fenster im Seitenblech
- 16.: Langloch
- 17.: Loch
- 18.: Stufenbolzen
- 19.: Mitnehmerring
- 20.: zugseitige Flanke
- 21.: schubseitige Flanke
- 22.: weiterer Stufenbolzen
- 23.: Schweißverbindung
- A: Rotationsachse

## Patentansprüche

1. Drehmomentübertragungsvorrichtung (1) mit zumindest einer ersten Baugruppe (2), die mit einer Abtriebswelle eines Motors verbindbar ist und einen Ausgangsflansch (9) aufweist, und zumindest einer zweiten Baugruppe (3), die getriebeseitig vormontierbar ist und einen Mitnehmerring (19) aufweist, wobei beide Baugruppen (2, 3) in axialer Richtung durch zumindest eine Steckverbindung (4) mit ineinandergreifenden Profilierungen (6) und Gegenprofilierungen (7) miteinander gekoppelt und über zumindest eine Verspannungseinrichtung (5) verspannt sind, **dadurch gekennzeichnet, dass** die Verspannungseinrichtung (5) zumindest teilweise im Wirkpfad zwischen den ineinandergreifenden Profilierungen (6) und Gegenprofilierungen (7) einerseits und dem Mitnehmerring (19) der zweiten Baugruppe (3) andererseits angeordnet ist, und dass die Verspannungseinrichtung (5) zumindest einen Verspannring (11) und zumindest einen Energiespeicher (8) aufweist, wobei der Verspannring (11) zumindest einzelne Vorsprünge in seinem Außenumfang aufweist, die ausgebildet sind, mit den entsprechenden Profilierungen (6) oder Gegenprofilierungen (7) zusammenzuwirken, so dass durch den mittels des zumindest einen Energiespeichers (8) vorgespannten Verspannrings (11) eine Verspannung der axialen Steckverbindung in Umfangsrichtung erfolgt.

2. Drehmomentübertragungsvorrichtung (1) nach Anspruch 1, wobei die Verspannungseinrichtung (5) zumindest teilweise in radialer Richtung innerhalb der ineinandergreifenden Profilierungen (6) und/oder Gegenprofilierungen (7) angeordnet ist.

3. Drehmomentübertragungsvorrichtung (1) nach Anspruch 1 oder 2, wobei die Verspannungseinrichtung (5) zumindest einen Energiespeicher (8) aufweist, und der Energiespeicher (8) vorzugsweise in radialer Richtung innerhalb der ineinandergreifenden Profilierungen (6) und/oder Gegenprofilierungen (7) angeordnet ist.

4. Drehmomentübertragungsvorrichtung (1) nach Anspruch 3, wobei ein Ende des Energiespeichers (8) sich an einem Verspannring (11) der Verspannungseinrichtung (5) abstützt, und ein zweites Ende des Energiespeichers (8) sich an zumindest einem Seitenblech (12, 13) abstützt, das drehfest mit dem Mitnehmerring (19) verbunden oder einteilig mit dem Mitnehmerring (19) ausgebildet ist, und wobei das Seitenblech (12, 13) vorzugsweise als Bauteil der Steckverbindung (4) die Profilierungen (6) oder Gegenprofilierungen (7) aufweist.

5. Drehmomentübertragungsvorrichtung (1) nach Anspruch 4, wobei der Verspannring (11) in axialer Richtung zwischen zwei Seitenblechen (12, 13) der Steckverbindung (4) und/oder der Verspannungseinrichtung (5) angeordnet ist.

6. Drehmomentübertragungsvorrichtung (1) nach Anspruch 4 oder 5, wobei der Energiespeicher (8) in Umfangsrichtung in Fenstern (14, 15) des Verspannrings (11) und des Seitenblechs oder der Seitenbleche (12, 13) angeordnet ist.

7. Drehmomentübertragungsvorrichtung (1) nach zumindest einem der Ansprüche 3 bis 6, wobei der Energiespeicher (8) als Druckfeder, vorzugsweise als gerade Druckfeder, ausgebildet ist.

8. Drehmomentübertragungsvorrichtung (1) nach zumindest einem der Ansprüche 1 bis 7, wobei die Profilierungen (6) oder Gegenprofilierungen (7) mittelbar oder unmittelbar mit dem Ausgangsflansch (9) der ersten Baugruppe (2) verbunden sind.

9. Drehmomentübertragungsvorrichtung (1) nach zumindest einem der Ansprüche 1 bis 7, wobei die Profilierungen (6) oder Gegenprofilierungen (7) einteilig mit dem Ausgangsflansch (9) der ersten Baugruppe (2) ausgebildet sind.

10. Drehmomentübertragungsvorrichtung (1) nach zumindest einem der Ansprüche 1 bis 9, wobei die erste Baugruppe (2) als Torsionsdämpfer, vorzugsweise als Zweimassenschwungrad, und die zweite Baugruppe (3) als Kupplung, vorzugsweise als Doppelkupplung, ausgebildet ist.

## Claims

1. Torque transmission device (1), with at least one first subassembly (2) which is connectable to an output shaft of an engine and has an output flange (9), and with at least one second subassembly (3) which is premountable on the transmission side and has a dog ring (19), the two subassemblies (2, 3) being coupled to one another in the axial direction by means of at least one plug connection (4) with intermeshing profiling (6) and counter-profilings (7) and being braced via at least one bracing device (5), **characterized in that** the bracing device (5) is arranged at least partially in the operative path between the intermeshing profilings (6) and counter-profilings (7), on the one hand, and the dog ring (19) of the second subassembly (3), on the other hand, and **in that** the bracing device (5) has at least one bracing ring (11) and at least one energy accumulator (8), the bracing ring (11) having in its outer circumference at least individual projections which are designed to cooperate with the corresponding profilings (6) or counter-profilings (7), so that bracing of the axial plug connection in the circumferential direction takes place by the bracing ring (11) prestressed by means of the at least one energy accumulator (8).

2. Torque transmission device (1) according to Claim 1, the bracing device (5) being arranged at least partially in the radial direction within the intermeshing profilings (6) and/or counter-profilings (7).

3. Torque transmission device (1) according to Claim 1 or 2, the bracing device (5) having at least one energy accumulator (8), and the energy accumulator (8) being arranged preferably in the radial direction within the intermeshing profilings (6) and/or counter-profilings (7).

4. Torque transmission device (1) according to Claim 3, one end of the energy accumulator (8) being supported on a bracing ring (11) of the bracing device (5), and a second end of the energy accumulator (8) being supported on at least one side plate (12, 13) which is connected fixedly in terms of rotation to the dog ring (19) or is formed in one part with the dog ring (19), and the side plate (12, 13) preferably having, as a component of the plug connection (4), the profilings (6) or counter-profilings (7).

5. Torque transmission device (1) according to Claim 4, the bracing ring (11) being arranged in the axial direction between two side plates (12, 13) of the plug connection (4) and/or of the bracing device (5).

6. Torque transmission device (1) according to Claim 4 or 5, the energy accumulator (8) being arranged in the circumferential direction in apertures (14, 15) of the bracing ring (11) and of the side plate or side plates (12, 13).

7. Torque transmission device (1) according to at least one of Claims 3 to 6, the energy accumulator (8) being designed as a compression spring, preferably as a straight compression spring.

8. Torque transmission device (1) according to at least one of Claims 1 to 7, the profilings (6) or counter-profilings (7) being connected indirectly or directly to the output flange (9) of the first subassembly (2).

9. Torque transmission device (1) according to at least one of Claims 1 to 7, the profilings (6) or counter-profilings (7) being formed in one part with the output flange (9) of the first subassembly (2).

10. Torque transmission device (1) according to at least one of Claims 1 to 9, the first subassembly (2) being designed as a torsion damper, preferably as a two-mass flywheel, and the second subassembly (3) being designed as a clutch, preferably as a double clutch.

## Revendications

1. Dispositif de transmission de couple (1) comprenant au moins un premier module (2) qui peut être connecté à un arbre de prise de force d'un moteur et qui présente une bride de sortie (9), et au moins un deuxième module (3), qui peut être prémonté du côté de la transmission et présente une bague d'entraînement (19), les deux modules (2, 3) étant accouplés l'un à l'autre dans la direction axiale par au moins une connexion par enfichage (4) avec des profilages (6) et des profilages conjugués (7) s'engageant les uns dans les autres et étant serrés par le biais d'au moins un dispositif de serrage (5), **caractérisé en ce que** le dispositif de serrage (5) est disposé au moins en partie dans le trajet fonctionnel entre les profilages (6) et les profilages conjugués (7) s'engageant les uns dans les autres d'une part et la bague d'entraînement (19) du deuxième module (3) d'autre part, et **en ce que** le dispositif de serrage (5) présente au moins une bague de serrage (11) et au moins un accumulateur d'énergie (8), la bague de serrage (11) présentant au moins des saillies individuelles dans sa périphérie extérieure, lesquelles sont réalisées de manière à coopérer avec les profilages (6) ou les profilages conjugués (7) correspondants de telle sorte que l'on obtienne un serrage de la connexion par enfichage axiale dans la direction périphérique par le biais de la bague de serrage (11) précontrainte au moyen de l'au moins un accumulateur d'énergie (8).

2. Dispositif de transmission de couple (1) selon la revendication 1, dans laquelle le dispositif de serrage (5) est disposé au moins en partie dans la direction radiale à l'intérieur des profilages (6) et/ou des profilages conjugués (7) s'engageant les uns dans les autres.

3. Dispositif de transmission de couple (1) selon la revendication 1 ou 2, dans lequel le dispositif de serrage (5) présente au moins un accumulateur d'énergie (8), et l'accumulateur d'énergie (8) est disposé de préférence dans la direction radiale à l'intérieur des profilages (6) et/ou des profilages conjugués (7) s'engageant les uns dans les autres.

4. Dispositif de transmission de couple (1) selon la revendication 3, dans lequel une extrémité de l'accumulateur d'énergie (8) s'appuie contre une bague de serrage (11) du dispositif de serrage (5), et une deuxième extrémité de l'accumulateur d'énergie (8) s'appuie contre au moins une tôle latérale (12, 13) qui est connectée de manière solidaire en rotation à la bague d'entraînement (19) ou qui est réalisée d'une seule pièce avec la bague d'entraînement (19), et la tôle latérale (12, 13) présentant de préférence en tant que composant de la connexion par enfichage (4) les profilages (6) ou les profilages conjugués (7).

5. Dispositif de transmission de couple (1) selon la revendication 4, dans lequel la bague de serrage (11) est disposée dans la direction axiale entre deux tôles latérales (12, 13) de la connexion par enfichage (4) et/ou du dispositif de serrage (5).

6. Dispositif de transmission de couple (1) selon la revendication 4 ou 5, dans lequel l'accumulateur d'énergie (8), dans la direction périphérique, est disposé dans des fenêtres (14, 15) de la bague de serrage (11) et de la tôle latérale ou des tôles latérales (12, 13).

7. Dispositif de transmission de couple (1) selon au moins l'une quelconque des revendications 3 à 6, dans lequel l'accumulateur d'énergie (8) est réalisé sous forme de ressort de compression, de préférence sous forme de ressort de compression droit.

8. Dispositif de transmission de couple (1) selon au moins l'une quelconque des revendications 1 à 7, dans lequel les profilages (6) ou les profilages conjugués (7) sont connectés de manière indirecte ou directe à la bride de sortie (9) du premier module (2).

9. Dispositif de transfert de couple (1) selon au moins l'une quelconque des revendications 1 à 7, dans lequel les profilages (6) ou les profilages conjugués (7) sont réalisés d'une seule pièce avec la bride de sortie (9) du premier module (2).

10. Dispositif de transmission de couple (1) selon au moins l'une quelconque des revendications 1 à 9, dans lequel le premier module (2) est réalisé sous forme d'amortisseur de torsions, de préférence sous forme de volant d'inertie à deux masses, et le deuxième module (3) est réalisé sous forme d'embrayage, de préférence sous forme de double embrayage.
